**Europäisches Patentamt**

**European Patent Office**

**Office européen des brevets**

(11) Numéro de publication: **0 138 686**
**B1**

# FASCICULE DE BREVET EUROPÉEN

(45) Date de publication du fascicule du brevet:
04.02.87

(51) Int. Cl.⁴: **B 23 K 1/20,** B 23 K 9/02

(21) Numéro de dépôt: **84401927.3**

(22) Date de dépôt: **27.09.84**

(54) **Rondelle de soudage et procédé de soudage la mettant en oeuvre.**

(30) Priorité: **12.10.83 FR 8316175**

(43) Date de publication de la demande:
**24.04.85 Bulletin 85/17**

(45) Mention de la délivrance du brevet:
**04.02.87 Bulletin 87/6**

(84) Etats contractants désignés:
**DE FR GB**

(56) Documents cité:
**DE-A-2 823 122**
**FR-A-843 106**
**US-A-4 134 607**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Denise, René, 18, rue Gérard Philipe, F-45330 Malesherbes (FR)**
Inventeur: **Moreau, Francis, 26, allée de la Brie Lisses, F-91000 Evry (FR)**

(74) Mandataire: **Moinat, François, S.N.E.C.M.A. Service des Brevets Boîte Postale 81, F-91003 Evry Cedex (FR)**

## Description

L'invention concerne les bagues de soudage, comme décrites dans le préambule de la revendications 1.

De telles bagues sont notamment connues du document US-A- 4 134 607. Malheureusement, elles sont conçues sous une forme relativement compliquée qui oblige à une préparation particulière des pièces à assembler. Le prix d'un tel type d'assemblage demeure donc relativement élevé.

Le but de l'invention est de proposer une bague de soudage extrêmement simple à fabriquer n'exigeant aucune préparation particulière des pièces à assembler, et permettant d'atteindre une très grande précision dans l'ajustement bout-à-bout des pièces à assembler.

Ce but est atteint selon l'invention en ce que sur chaque face de la bague de soudage sont prévus des reliefs de maintien desdits contours respectifs.

Bien que la forme de ces contours localement cylindriques puisse être quelconque, il s'agira dans la plupart des applications de cylindres vrais à section circulaire, l'application envisagée la plus courante étant l'assemblage bout-à-bout de pièces tubulaires. Le but recherché et atteint par l'invention dans ce dernier cas est la parfaite coaxialité des pièces.

Un avantage déterminant de la bague de soudage de l'invention est qu'elle peut être fabriquée très simplement et à bas prix de revient par des opérations classiques de poinçonnage-découpage, et d'emboutissage-découpage.

Un procédé de soudage utilisant la bague de soudage de l'invention permet un centrage parfait des pièces à assembler sans préparation particulière préalable de celles-ci.

D'autres caractéristiques et avantages de l'invention apparaîtront à la lecture de la description qui va suivre d'un mode de réalisation particulier et non limitatif. Cette description sera faite en référence aux dessins annexés sur lesquels:

- la figure 1 est une vue de face d'une rondelle conforme à l'invention,
- les figures 2 et 3 sont deux vues latérales de détail des reliefs prévus sur la rondelle, selon les directions F2 et F3,
- la figure 4 est une vue en coupe de deux pièces tubulaires à assembler avec la rondelle de l'invention interposée.

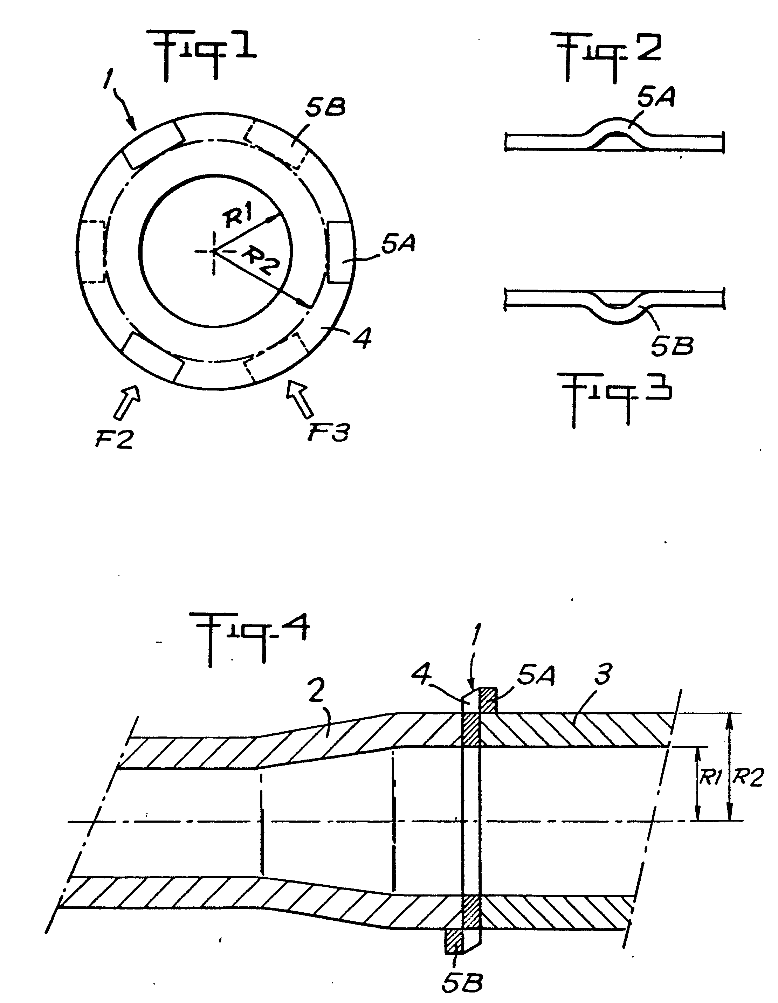

La bague de soudage 1, de forme plate, s'interpose entre les sections extrémales de deux pièces 2, 3 tubulaires, au moins dans la région des sections à assembler.

La bague de soudage 1 a un diamètre intérieur égal au diamètre intérieur 2R1 des pièces à assembler, tandis que son diamètre extérieur est supérieur au diamètre extérieur 2R2 desdites pièces, de manière à laisser dépasser une marge périphérique 4 dont les dimensions sont déterminées par les conditions de soudage et les épaisseurs des pièces.

Dans cette marge 4, six ergots de maintien et de centrage des pièces sont obtenus par découpage et déformation de courtes bandes circonférentielles marginales (5A, 5B) alternativement d'un côté et de l'autre de la bague de soudage 1. Lorsque la bague de soudage est en place, les trois ergots 5A enserrent le contour de l'extrémité de la pièce 3, et les trois ergots 5B celui de la pièce 2 réalisant ainsi la parfaite coaxialité des deux pièces.

L'épaisseur et le diamètre extérieur de la bague de soudage varient selon l'épaisseur des pièces à souder.

Bien évidemment, le nombre de reliefs de maintien, formés par de simples déformations locales de la marge périphérique 4, peut varier en fonction du contour.

## Revendications

1. Bague de soudage (1), constituée en matériau d'apport et destinée à s'interposer entre deux sections de pièces (2, 3) à assembler pour permettre leur alignement précis, chaque section des pièces (2, 3) ayant un contour de préférence cylindrique au droit de la bague de sondage, cette dernière étant constituée d'une rondelle dont la farme correspond aux dits contours augmentés d'une marge périphérique (4), caractérisé en ce que sur chaque face de cette rondelle sont prévus des reliefs (5A, 5B) de maintien des contours respectifs des pièces (2, 3).

2. Bague selon la revendication 1, destinée à l'assemblage de sections circulaires, caractérisée par une forme circulaire.

3. Bague selon la revendication 2, destinée à l'assemblage de sections circulaires de pièces tubulaires (2, 3) de même diamètre intérieur, caractérisée en ce que son diamètre intérieur (2R1) est égal à celui des pièces tubulaires.

4. Bague selon l'une quelconque des revendications 1 à 3, caractérisée en ce qu'elle est obtenue par poinçonnage-découpage.

5. Bague selon l'une quelconque des revendications 1 à 4, caractérisée en ce que les reliefs (5A, 5B) de maintien sont obtenus par emboutissage-découpage.

6. Bague selon l'une quelconque des revendications 2 ou 3, caractérisée par six reliefs (5A, 5B) de maintien répartis régulièrement sur la marge périphérique (4), alternativement sur l'une et l'autre face.

7. Procédé de soudage de deux sections de pièces (2, 3) à assembler ayant de préférence une section cylindrique, caractérisé en ce qu'on intercale une bague de soudage (1) avant soudage entre les deux sections de pièces (2, 3), cette bague de soudage (1) étant conforme à l'une quelconque des revendications 1 à 6.

## Patentansprüche

1. Schweißring (1), der aus einem Schweißzusatzwerkstoff besteht und zwischen zwei miteinander zu verbindende Teileabschnitte (2, 3) einsetzbar ist, um deren genaue Fluchtung zu ermöglichen, wobei jeder dieser Teileabschnitte (2, 3) an der Stelle des Schweißrings (1) eine vorzugsweise zylindrische Kontur aufweist und der Schweißring aus einer Scheibe besteht, deren Form den Konturen der Teileabschnitte (2, 3), vergrößert um einen umlaufenden Rand (4), entspricht, dadurch gekennzeichnet, daß auf jeder Seite dieser Scheibe Vorsprünge (5A, 5B) zur Halterung der entsprechenden Konturen der Teileabschnitte (2, 3) vorgesehen sind.

2. Schweißring nach Anspruch 1 zum Zusammenfügen kreisförmiger Querschnitte, gekennzeichnet durch eine kreisrunde Form.

3. Schweißring nach Anspruch 2 zum Zusammenfügen kreisförmiger Abschnitte von rohrförmigen Teilen (2, 3) mit gleichem Innendurchmeßser, dadurch gekennzeichnet, daß sein Innendurchmesser (2R1) gleich demjenigen der rohrförmigen Teile ist.

4. Schweißring nach einem der Ansprüche 1 bis 3, dadurch gekennzeichnet, daß er durch Prägestanzen hergstellt ist.

5. Schweißring nach einem der Ansprüche 1 bis 4, dadurch gekennzeichnet, daß die Halterungsvorsprünge (5A, 5B) durch einen Tiefziehstanzvorgang hergestellt sind.

6. Schweißring nach einem der Ansprüche 2 oder 3, dadurch gekennzeichnet, daß sechs Halterungsvorsprünge (5A, 5B) vorgesehen sind, die in gleichmäßiger Verteilung auf dem umlaufenden Rand (4) abwechselnd auf beiden Seiten angeordnet sind.

7. Verfahren zum Verschweißen zweier miteinander zu verbindender Teileabschnitte (2, 3) mit vorzugsweise zylindrischem Querschnitt, dadurch gekennzeichnet, daß vor dem Verschweißen der beiden Teileabschnitte (2, 3) zwischen sie ein Schweißring (1) nach einem der Ansprüche 1 bis 6 eingesetzt wird.

## Claims

1. Welding ring (1) made of a filler material and intended to be interposed between two sections of parts (2, 3) to be assembled in order to facilitate their precise alignment, each section of the parts (2, 3) having a preferably cylindrical contour at right angles to the welding ring, the latter being constituted by a washer of which the shape corresponds to the said contours increased by a peripheral margin (4), characterized in that on each face of the washer reliefs (5A, 5B) are provided for holding to the respective contours of the parts (2, 3).

2. Ring according to claim 1, intended for assembly of circular sections, characterized by a circular shape.

3. Ring according to claim 2, intended for the assembly of circular sections of tubular parts (2, 3) of the same internal diameter, characterized in that its inner diameter (2R1) is equal to that of the tubular parts.

4. Ring according to any one of claims 1 to 3, characterized in that it is produced by stamping-shearing.

5. Ring according to any one of claims 1 to 4, characterized in that the holding reliefs (5A, 5B) are produced by pressing-shearing.

6. Ring according to any one of claims 2 or 3, characterized by six holding reliefs (5A, 5B) regularly distributed on the peripheral margin (4), alternately on the one and the other face.

7. Method for welding two sections of parts (2, 3) to be assembled preferably having a cylindrical section characterized in that a welding ring (1) is interposed before welding between the two sections of the parts (2, 3), this welding ring (1) being shaped in accordance with any one of claims 1 to 6.

0 138 686

Fig.1

5B

R1
R2

5A

4

F2

F3

Fig.2

5A

5B

Fig.3

Fig.4

2

4

1

5A

3

R1 R2

5B

1